## Europäisches Patentamt

(19) **European Patent Office**

**Office européen des brevets**

(11) Veröffentlichungsnummer: **0 096 240**
**B1**

(12) # EUROPÄISCHE PATENTSCHRIFT

(45) Veröffentlichungstag der Patentschrift:
**20.11.86**

(51) Int. Cl.⁴: **A 47 B 77/14,** A 47 B 81/04,
A 47 J 47/16

(21) Anmeldenummer: **83104759.2**

(22) Anmeldetag: **14.05.83**

(54) **Vorrichtung zum Stapeln von Geschirr.**

(30) Priorität: **02.06.82 DE 3220740**

(43) Veröffentlichungstag der Anmeldung:
**21.12.83 Patentblatt 83/51**

(45) Bekanntmachung des Hinweises auf die Patenterteilung:
**20.11.86 Patentblatt 86/47**

(84) Benannte Vertragsstaaten:
**FR GB IT NL SE**

(56) Entgegenhaltungen:
**EP - A - 0 048 005**
**DE - A - 1 953 169**

(73) Patentinhaber: **ALFA-Institut für hauswirtschaftliche Produkt- und Verfahrens-Entwicklung GmbH, Schloss Reinhartshausen Albrechtstrasse 4, D-6228 Eltville am Rhein 2 (DE)**

(72) Erfinder: **Anschütz, Theo, Inselweg 2, D-6349 Sinn-Edingen (DE)**
Erfinder: **Schultz, Horst, Bergmannweg 2, D-6230 Frankfurt am Main 80 (DE)**
Erfinder: **Billen, Horst, Hallgartenerstrasse 29, D-6228 Hattenheim (DE)**

(74) Vertreter: **Keil, Rainer A., Dipl.-Phys. Dr. et al, Patentanwälte KEIL & SCHAAFHAUSEN Ammelburgstrasse 34, D-6000 Frankfurt am Main 1 (DE)**

## Beschreibung

Die Erfindung bezieht sich auf eine Vorrichtung zum Stapeln von Geschirr, wobei für jedes der zu stapelnden Geschirrstücke eine für die Aufnahme des Geschirrstückes bestimmte Halterung vorgesehen ist, wobei die Halterungen für die Veränderbarkeit ihrer Abstände und damit der von ihnen aufzunehmenden Geschirrstücke mittels einer im wesentlichen horizontalen Führungsschiene, welche z.B. als zueinander längsverschiebbare Teleskopschienenelemente aufweisende Teleskopschiene ausgebildet ist, verschieblich angeordnet sind und wobei die Führungsschiene jedenfalls in Aufbewahrungsstellung im wesentlichen parallel zu der vorderen Längskante einer Konsole oder eines Schrankbodens verläuft.

Bei einer solchen aus der EP-A2-0 048 005 (Fig. 3 und 4) bekannten Vorrichtung ist eine in der Aufbewahrungsstellung im wesentlichen parallel zu der vorderen Längskante eines Schrankbodens verlaufende Teleskopschiene, auf welcher die Halterungen für die Geschirrstücke angeordnet sind, nach Art eines Schwenkarmes an einer im wesentlichen lotrechten Schwenkachse angelenkt bzw. mit einer im wesentlichen lotrechten Schwenkwelle verbunden. Auf diese Weise können beim Öffnen einer Drehtür des Schrankes beim Verschwenken der Teleskopschiene in eine Zugriffsstellung im wesentlichen senkrecht zur vorderen Längskante des Schrankbodens die Geschirrstücke zwangsläufig aus ihrer eng gestapelten Aufbewahrungsstellung in die auseinandergezogene Zugriffslage gelangen. Hierdurch ist die Stapellänge, über welche Geschirrstücke untergebracht werden können, dadurch beschränkt, dass der Schienenschwenkarm aus Stabilitätsgründen und der notwendigerweise lediglich einseitigen Lagerung nicht beliebig lang sein kann. Auch ist der Zugriff zu den hinteren Geschirrstücken weniger leicht möglich, als dies bei den vollständig aus dem Schrankinneren herausgeschwenkten Geschirrstücken der Fall ist.

Aus der EP-A2-0 048 005 (Fig. 1 und 2) ist ferner eine Vorrichtung zur raumsparenden Stapelung von Geschirrtöpfen, Schüsseln u.dgl. bei einfacher Zugriffsmöglichkeit bekannt. Dabei sind die Geschirrstücke im wesentlichen auf einem horizontalen, senkrecht zur Vorderfront eines Schrankes, z.B. Küchenschrankes, geführten Auszug in Haltern derart aufgenommen, dass sich beim Ausziehen des Auszuges der Abstand der Halter und der von diesen aufzunehmenden Geschirrstücke vergrössert und damit die Zugriffsmöglichkeit verbessert wird. Für einen guten Zugriff zu den einzelnen Geschirrstücken erfordert diese Vorrichtung ein praktisch vollständiges Herausziehen des Auszuges. Ausserdem ist die Länge des Stapelraumes durch die Tiefe des Schrankes begrenzt, die üblicherweise vorgegebene normierte Tiefen nicht überschreitet. Die Geschirrstücke sind ferner unmittelbar von vorne nicht so gut herauszunehmen oder einzustapeln.

Aufgabe der vorliegenden Erfindung ist es, eine derartige Stapelvorrichtung hinsichtlich ihrer einfachen, raumsparenden und sicheren Stapelmöglichkeit und insbesondere hinsichtlich der Zugriffsmöglichkeit beim Einstapeln und Entnehmen der Geschirrstücke zu verbessern.

Diese Aufgabe wird erfindungsgemäss dadurch gelöst, dass die Führungsschiene im wesentlichen senkrecht zur vorderen Längskante der Konsole oder dem Schrankboden so weit herausziehbar gelagert ist, dass wenigstens auch die jeweils grössten Geschirrstücke mit ihrem hinteren Rand vor der Vorderfront der Konsole oder des Schrankes zu liegen kommen. Durch diese besondere Anordnung der Führungsschiene sind die einzelnen Geschirrteile bzw. deren Halterungen, nachdem die Führungsschiene nach vorne gezogen, beispielsweise nach Teleskopart seitlich auseinandergezogen wurde und damit die einzelnen Halterungen mit bzw. ohne Geschirrstücke auf Abstand gebracht sind, einfacher zugänglich, weil sich die Führungsschiene in ihrer ausgezogenen Stellung mit ihren Halterungen und ggf. eingestapelten Geschirrstücken ihrer gesamten Länge nach quer unmittelbar vor dem vor der Konsole oder dem Schrank stehenden Benutzer erstreckt und somit in voller Länge darbietet. Das Vorziehen der Führungsschiene stellt sicher, dass das seitliche Auseinanderziehen der Geschirrteile nicht durch die seitlichen Begrenzungswände des Schrankes oder sonstige seitlich angrenzenden Wände behindert wird. In der zusammengeschobenen Stellung der Führungsschiene nehmen die Geschirrstücke, die sich dabei teilweise ineinanderschieben, nur einen geringen Stapelraum für die Aufbewahrung ein.

Bei einer besonderen Ausgestaltung des Erfindungsgedankens ist die Führungsschiene auf einer oder mehreren senkrecht zu ihrer Längserstreckung verlaufenden Auszugsschienen verschieblich gehalten. Die Auszugsschienen verlaufen also im wesentlichen senkrecht zur vorderen Längskante der Konsole bzw. des Schrankbodens. Trotz der festliegenden Konsole bzw. des festliegenden Schrankbodens kann auf diese Weise die Führungsschiene vollständig so weit herausgefahren werden, dass die Führungsschiene mit den Halterungen und Geschirrstücken vor der Vorderfront der Konsole bzw. des Schrankes teleskopartig auseinandergezogen werden kann, um die gute Zugänglichkeit der Halterungen und der Geschirrstücke zu gewährleisten.

Geschirr wird üblicherweise in Schränken, beispielsweise Küchenschränken, mit seitlichen Begrenzungswänden aufbewahrt. In diesem Fall kann der Schrankboden mit der auf ihm parallel zu seiner vorderen Längskante verlaufenden Führungsschiene bei einer besonderen Ausgestaltung des Erfindungsgedankens im wesentlichen senkrecht zur Ebene der Vorderfront des Schrankes ausziehbar, d.h. als Auszug, ausgebildet sein. Die Führungsschiene mit den Halterungen für die Aufnahme der Geschirrstücke befindet sich in ihrer zusammengeschobenen Stellung im Inneren des Schrankkorpus und die von den Halterungen aufgenommenen Geschirrstücke damit in einer raumsparenden geschützten Aufbewahrungslage. Für den Zugriff kann der als Auszug ausgebildete Schrankboden mit der Führungsschiene aus dem Schrankinneren vorgezogen werden, und zwar so weit, dass die Geschirrstücke mit ihrem hinteren Rand vor der Schrankfront zu liegen kommen. Dann kann die Führungsschiene seitlich teleskopartig entweder nach einer oder nach beiden Seiten auseinandergezogen werden, wodurch die Halterungen mit den eingestapelten Geschirrstücken auf Abstand kommen, um einfach ergriffen oder einfach eingestapelt werden zu können. Die Stapellänge ist hierbei nicht auf die Tiefe des Schrankkorpus beschränkt. Entsprechend der üblichen Abmessungen von Geschirrstücken kann ein solcher Schrank vergleichsweise geringe Tiefe, aber vergleichsweise grosse Breite haben.

Die Auszugsschiene kann ebenfalls als Teleskopschiene ausgebildet sein, so dass sie trotz der guten Ausziehbarkeit auf eine kurze Länge zusammengeschoben werden kann.

Eine einfache Betätigung der erfindungsgemässen Vorrichtung für das Einstapeln von Geschirr erhält man nach dem Erfindungsgedanken insbesondere dann, wenn die Halterungen für die Geschirrstücke über eine Mitnehmereinrichtung, z.B. Schnur, Kette, Gummizug oder Feder, derart untereinander verbunden sind, dass bei der Bewegung der in Auszugsrichtung vordersten Halterung die nachfolgenden Halterungen solange mitgezogen werden, bis der erforderliche Abstand der Halterungen voneinander vorliegt.

Gemäss einem besonderen weiteren Merkmal der Erfindung kann/können die Führungsschiene und/oder die Auszugsschiene zur Horizontalen geringfügig geneigt sein. Die Schräglage ist dabei so getroffen, dass das Heraus- und Auseinanderfahren der beiden Schienen aufgrund des Eigengewichtes, insbesondere, wenn die Geschirrstücke in ihre Halterungen eingesetzt sind, nach Freigabe, also beispielsweise Öffnung einer Schranktür, selbsttätig erfolgt. Für das Auseinanderfahren der Schienen können auch besondere Antriebe, wie Gewichtsbelastung, Federkraft oder motorischer Art vorgesehen sein.

Die Halterungen der Führungsschiene haben zweckmässigerweise unterschiedliche Höhe, so dass Geschirrstücke unterschiedliche Grösse, z.B. Töpfe unterschiedlichen Durchmessers bei möglichst kurzer Halterungslänge in den Halterungen aus aufgenommen sind, dass sie beim Zusammenschieben der Halterung in ihrer Aufbewahrungslage gerade noch ineinandergreifen können. In diesem Fall liegen dann beispielsweise bei der Einstapelung von Töpfen die Mittelachsen in ein und derselben vertikalen Ebene, aber nur in geringem vertikalen Abstand übereinander gestaffffelt, d.h. von oben gesehen gleich, horizontal gesehen jedoch versetzt zueinander.

Ferner ist es in Weiterbildung des Erfindungsgedankens von Vorteil, wenn auf ein und derselben Führungsschiene in einem Schienenabschnitt Halterungen für Deckel und in einem anderen Abschnitt Halterungen für die zugehörigen Töpfe vorgesehen sind. Diese Massnahme gewährleistet bei raumsparender Unterbringung dieser Geschirrstücke, dass die einander zugehörigen Töpfe und Deckel auf ein und derselben Führungsschiene nahe beieinander geordnet griffbereit angeordnet sind.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung.

Es zeigt:

Fig. 1 eine die Erfindung aufweisende Stapelvorrichtung am Beispiel eines Hängeschrankes gemäss Schnittansicht C–D von Fig. 2 bei zusammen- und eingeschobenen Schienen, und

Fig. 2 schematisch eine Schnittdarstellung gemäss A–B von Fig. 1.

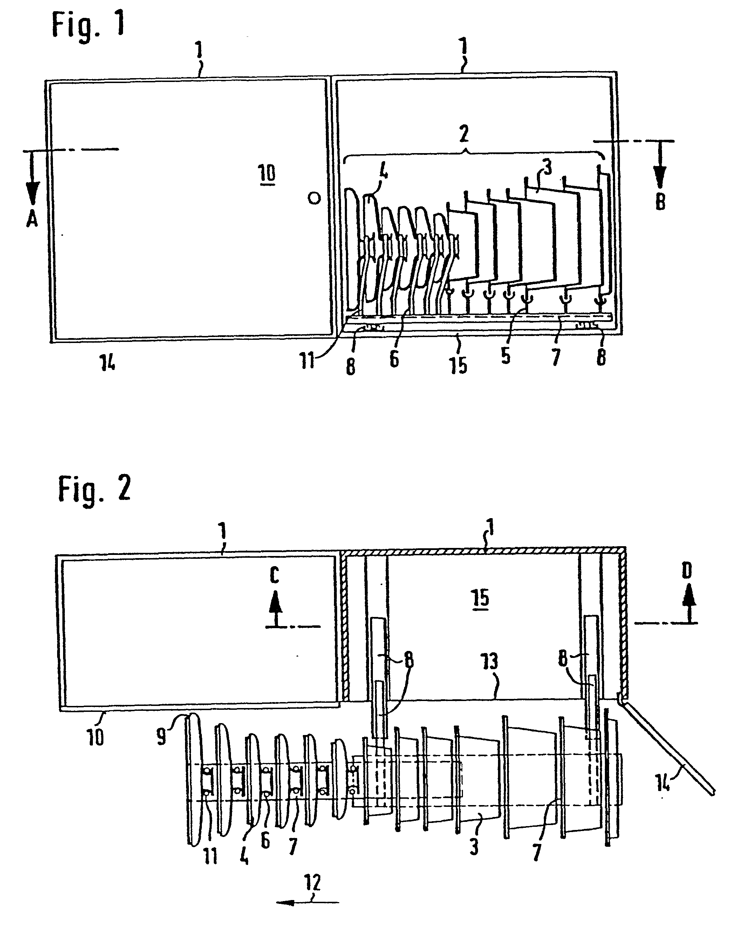

Nach Fig. 1 sind zwei nebeneinander beispielsweise an einer Wand befestigte, als Hängeschränke ausgebildete Schränke 1 dargestellt. Der linke Schrank 1 ist mit einer Drehtür 14 verschlossen. Bei dem rechten Schrank 1 ist die entsprechende Drehtür abgenommen, damit der Einblick in den Innenraum des Schrankes 1 freigegeben ist. Auf dem unteren Boden 15, der fest mit den Seitenwandungen und der Rückwand des Schrankes 1 verbunden ist, befinden sich im Abstand voneinander zwei Auszugsschienen 8. Bei der Darstellung von Fig. 1 befinden sich die Auszugsschienen 8 in zusammengeschobener Stellung, während sie gemäss Fig. 2 teleskopartig auseinandergezogen sind. Wie aus Fig. 2 ersichtlich, verlaufen die Auszugsschienen 8 senkrecht zur Vorderfront 10 des Schrankes 1. Auf dem längsbeweglichen Teil der Auszugsschienen 8 ist quer zu ihnen eine Führungsschiene 7 getragen, die demzufolge im wesentlichen parallel zur Vorderkante 13 des Bodens 15 verläuft. Die Führungsschiene 7 ist ebenfalls als Auszugsschiene ausgebildet und in Fig. 1 in ihrer zusammengezogenen Stellung und in Fig. 2 in ihrer auseinandergezogenen Stellung dargestellt. Danach besteht die Führungsschiene 7 in diesem Fall aus zwei zueinander längsverschieblich aneinander geführten Schienenabschnitten, auf denen jeweils Halterungen 5 und 6 für die Aufnahme von Geschirrstücken 2 abstandsverschieblich zueinander aufgenommen sind. Die eine Sorte von Halterungen 5, die im wesentlichen auf dem bezüglich der Auszugsschienen 8 festliegenden Schienenabschnitte vorgesehen sind, dient der Aufnahme von Töpfen 3, die andere Sorte von Halterungen 6, die auf einem teleskopartig ausziehbaren Schienenabschnitt der Führungsschiene 7 verschieblich aufgenommen sind, dienen der Halterung der zu den Töpfen 3 gehörenden Deckel 4. Wie aus Fig. 2 ersichtlich, sind die Auszugsschienen 8 teleskopartig derart auseinanderziehbar, dass wenigstens auch die grössten Geschirrstücke 2 mit ihrem hinteren Rand 9 vor der Schrankfront

10 zu liegen kommen. Nach dem Ausziehen der Auszugsschienen 8 aus dem Schrankinnenraum kann daher die Führungsschiene 7, wie aus Fig. 2 ersichtlich, seitlich in Pfeilrichtung 12 ebenfalls auseinandergezogen werden. Dadurch gelangen die vorher eng zusammenliegenden Halterungen 5 und 6 mit ihren Geschirrstücken 2 auf einen grösseren, und zwar so grossen Abstand voneinander, dass die Töpfe 3 und die Deckel 4 einfach aus ihren Halterungen 5, 6 entnommen oder neue Töpfe 3 und Deckel 4 in freie Halterungen 5, 6 eingesetzt werden können. Das Auseinanderziehen der Halterungen 5 und 6 beim teleskopartigen Ausziehen der Führungsschiene 7 kann beispielsweise dadurch geschehen, dass die Halterungen 5 und 6 über eine (nicht dargestellte) Mitnehmereinrichtung, z.B. Schnur, Kette, Gummizug oder Feder derart miteinander verbunden sind, dass bei der Bewegung der in Auszugrichtung 12 vordersten äusseren Halterung 11 die nachfolgenden Halterungen 5 und 6 solange mitgezogen werden, bis der erforderliche Abstand der Halterungen 5, 6 voneinander vorliegt.

Die erfindungsgemässe Vorrichtung kann ebenso an einem Unterschrank oder auf einer Konsole ausgebildet sein. Die erfindungsgemässe Vorrichtung hat den besonderen Vorteil, dass das Herausziehen der Geschirrstücke im horizontal gestapelten Zustand mit einer Handbewegung bewerkstelligt werden kann. Gleichzeitig kann das herausgefahrene Geschirr auch mit der einen Hand bzw. der gleichen Hand auseinandergezogen werden. Die Bedienung der Vorrichtung ist dadurch ausserordentlich einfach und bequem. Statt, wie bei dem dargestellten Ausführungsbeispiel nur nach einer Seite, kann die Führungsschiene auch nach beiden Seiten teleskopartig auseinanderfahrbar sein. Wenn die Führungsschiene selbst auf einem als Auszug ausgebildeten Zwischenboden eines Schrankes angeordnet ist, können besondere Auszugsschienen auf dem Boden selbstverständlich entfallen. Bei dem zuvor dargestellten Ausführungsbeispiel ist nur eine Führungsschiene vorhanden. Selbstverständlich können für die Halterung der jeweiligen Geschirrstücke auch zwei oder mehr unmittelbar parallel verlaufende Führungsschienen vorgesehen sein. Auch die Anzahl der Auszugsschienen ist nicht auf zwei beschränkt.

Bezugszeichenliste:

1 Schrank
2 Geschirrstücke
3 Töpfe
4 Deckel
5 Halterungen
6 Halterungen
7 Führungsschiene
8 Auszugsschiene
9 hinterer Rand
10 Schrankfront
11 äusserste Halterung
12 Pfeilrichtung
13 Längskante
14 Drehtür
15 Boden

**Patentansprüche**

1. Vorrichtung zum Stapeln von Geschirr, wobei für jedes der zu stapelnden Geschirrstücke (2) eine für die Aufnahme des Geschirrstückes (2) bestimmte Halterung (5, 6) vorgesehen ist, wobei die Halterungen (5, 6) für die Veränderbarkeit ihrer Abstände und damit der von ihnen aufzunehmenden Geschirrstücke (2) mittels einer im wesentlichen horizontalen Führungsschiene (7), welche z.B. als zueinander längsverschiebbare Teleskopschienenelemente aufweisende Teleskopschiene ausgebildet ist, verschieblich angeordnet sind und wobei die Führungsschiene (7) jedenfalls in der Aufbewahrungsstellung im wesentlichen parallel zu der vorderen Längskante (13) einer Konsole oder eines Schrankbodens (15) verläuft, dadurch gekennzeichnet, dass die Führungsschiene (7) im wesentlichen senkrecht zur vorderen Längskante (13) der Konsole oder des Schrankbodens (15) so weit herausziehbar gelagert ist, dass wenigstens auch die jeweils grössten Geschirrstücke (2) mit ihrem hinteren Rand (9) vor der Vorderfront (10) der Konsole oder des Schrankes (1) zu liegen kommen.

2. Vorrichtung nach Anspruch 1, dadurch gekennzeichnet, dass die Führungsschiene (7) auf im wesentlichen senkrecht zu ihrer Längserstreckung verlaufenden Auszugsschienen (8) verschieblich gehalten ist.

3. Vorrichtung nach Anspruch 1, dadurch gekennzeichnet, dass der Schrankboden (15) mit der auf ihm parallel zu seiner vorderen Längskante (13) verlaufenden Führungsschiene (7) im wesentlichen senkrecht zur vorderen Längskante (13) der Konsole bzw. des Schrankbodens (15) oder zur Ebene der Vorderfront (10) des Schrankes (1) ausziehbar, d.h. als Auszug, ausgebildet ist.

4. Vorrichtung nach Anspruch 2, dadurch gekennzeichnet, dass die Auszugschienen (8) als Teleskopschienen ausgebildet sind.

5. Vorrichtung nach einem der Ansprüche 1 bis 4, dadurch gekennzeichnet, dass die Halterungen (5, 6) für die Geschirrstücke (2) über eine Mitnehmereinrichtung, z.B. Schnur, Kette, Gummizug oder Feder, derart miteinander verbunden sind, dass bei der Bewegung der in Auszugrichtung (12) vordersten Halterung (11) die nachfolgenden Halterungen (5, 6) so lange mitgezogen werden, bis der erforderliche Abstand der Halterungen (5, 6, 11) voneinander vorliegt.

6. Vorrichtung nach einem der Ansprüche 1 bis 5, dadurch gekennzeichnet, dass die Führungsschiene (7) und/oder die Auszugschiene (8) zur Horizontalen geringfügig geneigt verlaufen/verläuft.

7. Vorrichtung nach einem der Ansprüche 1 bis 6, dadurch gekennzeichnet, dass die Halterungen (5, 6) unterschiedliche Höhe haben.

8. Vorrichtung nach einem der Ansprüche 1 bis 7, dadurch gekennzeichnet, dass auf ein und derselben Führungsschiene (7) in einem Schienenabschnitt Halterungen (5) für Töpfe (3) und in einem anderen Schienenabschnitt Halterungen (6) für Deckel (4) vorgesehen sind.

## Claims

1. A device for stacking of dishes, wherein a support (5, 6) is provided for each of the units of dishes (2) to be stacked intended to accommodate such unit of dish (2), with the supports (5, 6) being displaceably disposed for safeguarding the variability of the spaces therebetween and, hence, between the units (2) to be accommodated thereby by means of a substantially horizontal guide rail (7) formed, for example, as a telescopic rail comprising telescopic rail elements longitudinally displaceable with respect to one another, and with the guide rail (7) at least in the storing position extending substantially in parallel to the front-sided longitudinal edge (13) of a console or a cabinet bottom (15), characterized in that the guide rail (7) is disposed substantially perpendicular to the front-sided longitudinal edge (13) of the console or of the cabinet bottom (15) to be retractable to such a degree as to cause at least also the respectively largest units of dishes (2) to be disposed with the rear rim (9) thereof ahead of the front face (10) of the console or cabinet (1).

2. A device according to claim 1, characterized in that the guide rail (7) is displaceably held on retractable rails (8) extending substantially perpendicular to the longitudinal extension thereof.

3. A device according to claim 1, characterized in that the cabinet bottom (15) with the guide rail (7) extending in parallel to the front-sided longitudinal edge (13) thereof is of a rectractable, i.e. drawertype configuration substantially perpendicular to the front-sided longitudinal edge (13) of the console or cabinet bottom (15) or to the plane of the front face (10) of the cabinet (1).

4. A device according to claim 2, characterized in that the retractable rails (8) are formed as telescopic rails.

5. A device according to any one of claims 1 to 4, characterized in that the supports (5, 6) for the units of dishes (2), via a carrying means, e.g. a cable, chain, elastic or spring, are so interconnected that upon movement of the support (11) which, in the direction of retraction (12) is the foremost support, the following supports (5, 6) are pulled along until the required space between the supports (5, 6, 11) is reached.

6. A device according to any one of claims 1 to 5, characterized in that the guide rail (7) and/or the retractable rail (8) extend(s) slightly inclinded to the horizontal.

7. A device according to any one of claims 1 to 6, characterized in that the supports (5, 6) are different in height.

8. A device according to any one of claims 1 to 7, characterized in that provided on one and the same guide rail (7), in one rail section, are supports (5) for pots (3) and in another rail section, supports (6) for lids (4).

## Revendications

1. Dispositif à empiler de la vaisselle, dans lequel est prévu pour chaque des pièces de vaisselle (2) à empiler une attache (5, 6) pour cueillir la pièce de vaisselle (2), les attaches (5, 6) étant disposées dans une manière déplaçable pour sauvegarder la variabilité des écarts entre eux et, en conséquence, entre les pièces de vaisselle (2), à cueillir par eux, par l'intermédiaire d'une glissière de guidage (7) essentiellement horizontale formée, par example, comme glissière télescopique comportant des éléments de glissière télescopique déplaçable longitudinalement l'un à l'autre, et la glissière de guidage (7) s'étendant chaque fois dans la position d'empilage essentiellement en parallèle à l'arête longitudinale (13) avant d'une console ou d'un plancher de buffet (15), caractérisé en ce que la glissière de guidage (7) est disposé essentiellement perpendiculaire sur l'arête longitudinale (13) avant de la console ou du plancher de buffet (15) dans une manière extensible jusqu'à ce point qu'au moins les pièces de vaisselle (2) les plus larges avec leur arête (9) arrière sont également disposé avant le front (10) de la console ou du buffet (1).

2. Dispositif selon la revendication 1, caractérisé en ce que la glissière de guidage (7) est tenue dans une manière déplaçable sur des glissière extensibles (8) s'étendant essentiellement perpendiculaire sur leur extension longitudinale.

3. Dispositif selon la revendication 1, caractérisé en ce que le plancher de buffet (15) avec la glissière de guidage (7) s'étendant sur lui en parallèle à son arête longitudinale (13) avant est formé dans une manière extensible, c'est à dire comme tiroir, essentiellement perpendiculaire sur l'arête longitudinale (13) avant de la console ou du plancher de buffet (15) ou sur le plan du front (10) du buffet.

4. Dispositif selon la revendication 2, caractérisé en ce que les glissières extensibles (8) sont formées come glissières télescopiques.

5. Dispositif selon l'une des revendications 1 à 4, caractérisé en ce que les attaches (5, 6) pour les pièces de vaisselle (2) par l'intermédiaire d'un moyen d'entraînement, par example, cordon, chaîne, câble élastique ou ressort, sont reliées l'un à l'autre de telle manière qu'en mouvement de l'attache (11) le plus avant en sens d'extraction (12), les attaches (5, 6) suivantes sont entraînées jusqu'à ce que l'écart entre les attaches (5, 6, 11) réquiré est atteint.

6. Dispositif selon l'une des revendications 1 à 5, caractérisé en ce que la glissière de guidage (7) et/ou la glissière extensible (8) s'étend(ent) dans une manière un peu inclinée à la ligne horizontale.

7. Dispositif selon l'une des revendication 1 à 6, caractérisé en ce que les attaches (5, 6) sont d'une hauteur différente.

8. Dispositif selon l'une des revendications 1 à 7, caractérisé en ce que sur la même glissière de guidage (7) des attaches (5) pour des casseroles (3) sont prévues dans l'une section de glissière et des attaches (6) pour des couvercles (4) sont prévues dans une autre section de glissière.

# Fig. 1

# Fig. 2